## Europäisches Patentamt
## European Patent Office
## Office européen des brevets

(11) Veröffentlichungsnummer: **0 121 122**
**B1**

(12) # EUROPÄISCHE PATENTSCHRIFT

(45) Veröffentlichungstag der Patentschrift:
20.05.87

(51) Int. Cl.⁴: **F 16 L  3/14**

(21) Anmeldenummer: **84102300.5**

(22) Anmeldetag: **03.03.84**

(54) **Kabelbandschelle.**

(30) Priorität: **08.03.83  DE 3308136**

(43) Veröffentlichungstag der Anmeldung:
**10.10.84 Patentblatt 84/41**

(45) Bekanntmachung des Hinweises auf die Patenterteilung:
**20.05.87 Patentblatt 87/21**

(84) Benannte Vertragsstaaten:
**AT BE CH DE FR GB IT LI LU NL SE**

(56) Entgegenhaltungen:
**AT-A-180 784**
**DE-A-1 903 587**
**DE-A-2 919 144**
**FR-A-1 287 586**
**US-A-953 394**
**US-A-1 455 612**
**US-A-2 001 917**

(73) Patentinhaber: **Stebel, Horst, Ostermannsholz 37,
D-4322 Sprockhövel 2 (DE)**

(72) Erfinder: **Stebel, Horst, Ostermannsholz 37, D-4322
Sprockhövel 2 (DE)**

(74) Vertreter: **Sturies, Herbert, Patentanwälte Dr. Ing.
Dipl. Phys. Herbert Sturies Dipl. Ing. Peter
Eichler Postfach 20 12 42, D-5600 Wuppertal 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung bezieht sich auf eine Kabelbandschelle aus mit einer flexiblen Metalleinlage versehenem Kunststoff, die an ihrem einen Ende eine zum Durchstecken des anderen Endes dienende Öse besitzt, insbesondere für die Aufhängebefestigung von Kabeln, Leitungen, Rohren od. dgl. an Spannseilen.

Zur Befestigung von Kabeln od. dgl. an sie tragenden Spannseilen ist es bekannt, dafür Isolierbandschellen zu verwenden, um die bei stromführenden Kabeln und Leitungen die nach etwaigem Kabelbruch auftretende Gefahr der Spannungsverschleppung zu verhindern, während solche Bandschellen bei der Aufhängebefestigung von Rohren zumeist aus Gründen der Korrosionsfreiheit eingesetzt werden. Die aus Kunststoff bestehenden Bandschellen besitzen eine fortlaufende Zahnung und eine innerhalb ihrer Öse befindliche Sperrzunge (DE-A- 29 19 144). Die Bandschelle wird um das Spannseil und das Kabel oder Rohr geschlungen, sodann das freie Bandende durch die Öse hindurchgesteckt und schließlich das Band zugezogen, wobei die Sperrzunge das geschlaufte Band unter Zugspannung hält und sein selbsttätiges Aufziehen verhindert. Dauerbelastungen führen aber dazu, daß der für solche Kabelbandschellen verwendete thermoplastische Kunststoff zu fließen beginnt, wodurch die Schelle sich zunächst lockert, die Bandschlaufe also lose wird, jedoch das Gewicht des Kabels eine gewisse Spannung darin aufrechterhält. Sie führt zu Spannungsrißkorrosion und damit zur vorzeitigen Alterung und schließlich zum Bruch der Bandschelle. Bei kurzlebigen Produkten und bei Einsatz solcher Bandschellen in Innenräumen wirkt sich diese vorzeitige Alterung nicht allzu nachteilig aus. Anders jedoch, wenn solche Isolierbandschellen im Freilufteinsatz und dazu noch unter extremen Temperatur- und Witterungsbedingungen verwendet werden. Dann kommt es unter dem Einfluß der Temperaturwechsel und insbesondere auch unter Einwirkung der UV-Strahlung zu vergleichsweise schneller Alterung solcher Kunststoff-Kabelbandschellen, die je nach Belastung schon sehr bald zu Bruch gehen. Man muß aber gerade von im Freien verwendeten Kabelbefestigungen, wie z. B. bei der Stromversorgung von Straßenbeleuchtungsanlagen, eine wesentlich längere Lebensdauer erwarten, nämlich von 10 bis 20 Jahren. Wenn hier eine Kabelbandschelle bricht, werden die nächsten Bandschellen um so höher beansprucht. Sie brechen dann ebenfalls, so daß es zu einer entsprechenden Kettenreaktion kommt. Hierdurch ist es schon vorgekommen, daß lange Beleuchtungskabelstrecken sich vom Spannseil lösten und sich auf die Fahrbahn im öffentlichen Straßenverkehr absenkten.

Um der vorerwähnten Gefahr zu begegnen, ist man dazu übergegangen, Kabelbandschellen aus mit einer flexiblen Metalleinlage versehenem Kunststoff herzustellenr wobei als Metalleinlage regelmäßig ein entsprechendes metallisches Flachband verwendet wird (FR-A- 12 87 586). Die aus Kunststoff bestehende Isolationsschicht wird dabei entweder durch Beschichtung aufgetragen oder als Isolierschlauch über das Metallband gezogen. Aber auch hier kommt es in beiden Fällen zu vorzeitiger Alterung der Kunststoff-Isolierung, und zwar wiederum durch eine entsprechende Überbeanspruchung des Kunststoffs. So wird bei der Beschichtung des Flachbandes beim Aushärtevorgang der Kunststoff über die Kanten der Bänder stärker gespannt, so daß an solchen Kanten die Beschichtung am schwächsten ist, obwohl in der Praxis gerade hier die höchste Beanspruchung auftritt. Ähnlich ist es bei der Aufbringung von Isolierschläuchen, die als Rundschläuche hergestellt, danach flachgedrückt und über das Metallband geschoben werden. Dabei kommt es dann an den Biegeradien der flachgedrückten Stellen des Kunststoffschlauchs wieder zu entsprechenden Überbeanspruchungen, die zu vorzeitiger Alterung führen.

Der Erfindung liegt daher die Aufgabe zugrunde, eine Kabelbandschelle aus mit einer flexiblen Metalleinlage versehenem Kunststoff zu schaffen, die einfach und preiswert herzustellen und so beschaffen ist, daß dabei ihre Kunststoffummantelung wesentlich geringeren Beanspruchungen unterworfen ist, also wesentlich mehr geschont wird und dadurch die Bandschelle eine ungleich längere Lebensdauer besitzt. Diese Aufgabe wird ausgehend von einer Kabelbandschelle der eingangs erwähnten Gattung erfindungsgemäß dadurch gelöst, daß die Bandschelle aus kunststoffummanteltem Runddraht besteht, der zu einer in ihrem Scheitel die Öse bildenden U-Form mit nach innen abgekröpften, dicht aneinanderliegenden Schenkeln gebogen ist, die fest miteinander verbunden sind. Auf diese Weise kommt man zu einer Kabelbandschelle, bei der der verwendete runde metallische Trägerkörper, nämlich der Runddraht, die Voraussetzung dafür schafft, daß auch seine Kunststoffummantelung abgerundet, also frei von scharfen Kanten und lokalen Überbeanspruchungen ist, mithin auch wesentlich besser auf dem Metalldraht haftet, ohne daß es zu Spannungsrissen und entsprechenden Korrosionsschäden kommt.

Die neue Kabelbandschelle kann auch sehr einfach hergestellt werden, insbesondere wenn dafür entsprechend U-förmig gebogener, isolierter Leitungsdraht verwendet wird, dessen nebeneinanderliegende Schenkel einfach miteinander verklebt oder aber durch Wärmeanwendung verschweißt worden sind. Grundsätzlich kann die Kabelbandschelle auch aus Runddraht bestehen, der zunächst U-förmig gebogen und gekröpft und erst dann mit Kunststoff beschichtet wird. In allen Fällen können die so hergestellten Bandschellen mit ihren aneinanderhaftenden Drahtschenkeln und deren freien Enden einfach durch die den Scheitel der U-Form bildende Öse hindurchgeschlauft und dann festgezogen werden.

Die Kabelbandschelle kann auch aus mehreren ineinandergeschachtelt liegenden, entsprechend geformten, kunststoffummantelten Runddrähten bestehen, die über ihre aneinanderliegenden Schenkel fest miteinander verbunden sind. Dadurch kann man entsprechend höhere Tragfähigkeiten erzielen, wie das etwa zur Aufhängebefestigung schwerer Kabel, Leitungen oder Rohre an Spannseilen zuweilen notwendig ist.

Nach einem weiteren Merkmal der Erfindung ist die Kabelbandschelle mit einem ihre Öse aufnehmenden Verschlußkopf versehen, der mit einer die Ösen-Aufnahme bildenden, entsprechend gerundeten, seitlichen Aussparung versehen ist, die in einen die einzufädelnden Schenkel der Bandschelle aufnehmenden länglichen Einfädelkanal übergeht und in ihrem Boden ein Durchsteckfenster für das durch letzteres und die Öse hindurchzusteckende Bandschellenende aufweist. Durch diesen Verschlußkopf wird sichergestellt, daß die Öse beim Zuziehen der Bandschlaufe formstabil bleibt, letztere sich also nicht von selbst aufziehen kann. Dagegen sichert weiterhin, daß im Boden der Aussparung des Verschlußkopfes eine in das Durchsteckfenster hineinragende und in Durchsteckrichtung des freien Bandschellenendes weisender federnde Klemmzunge vorgesehen ist. Eine noch größere Sicherheit gegen selbständiges Aufziehen der Kabelbandschelle wird dadurch erzielt, daß der Verschlußkopf an seinem dem Einfädelkanal gegenüberliegenden Ende ein gabelartig ausgebildetes Klemmaul für das durch das Durchsteckfenster und die Öse hindurchzusteckende und um 180° zurückzubiegende freie Bandschellenende aufweist.

In der Zeichnung sind mehrere vorteilhafte Ausführungsbeispiele nach der Erfindung dargestellt. Dabei zeigen

Fig. 1 und 2 eine Kabelbandschelle einfachster Ausführungsart in gestreckter bzw. durchgeschlaufter Form,

Fig. 3 eine mit einem zusätzlichen Verschlußkopf versehene Kabelbandschelle in ihrer Einsatzweiser

Fig. 4 einen Schnitt nach der Linie IV - IV der Fig.3,

Fig. 5 und 6 den Verschlußkopf in vergrößerter Darstellung in der Draufsicht und Unteransicht,

Fig.7 einen Schnitt nach der Linie VII - VII der Fig. 5,

Fig. 8 eine aus zwei ineinander geschachtelten, ummantelten Runddrähten bestehende Kabelbandschelle in der Teildraufsicht und

Fig. 9 die Draufsicht auf einen Verschlußkopf anderer Ausführungsart mit eingelegtem Bandschellendraht.

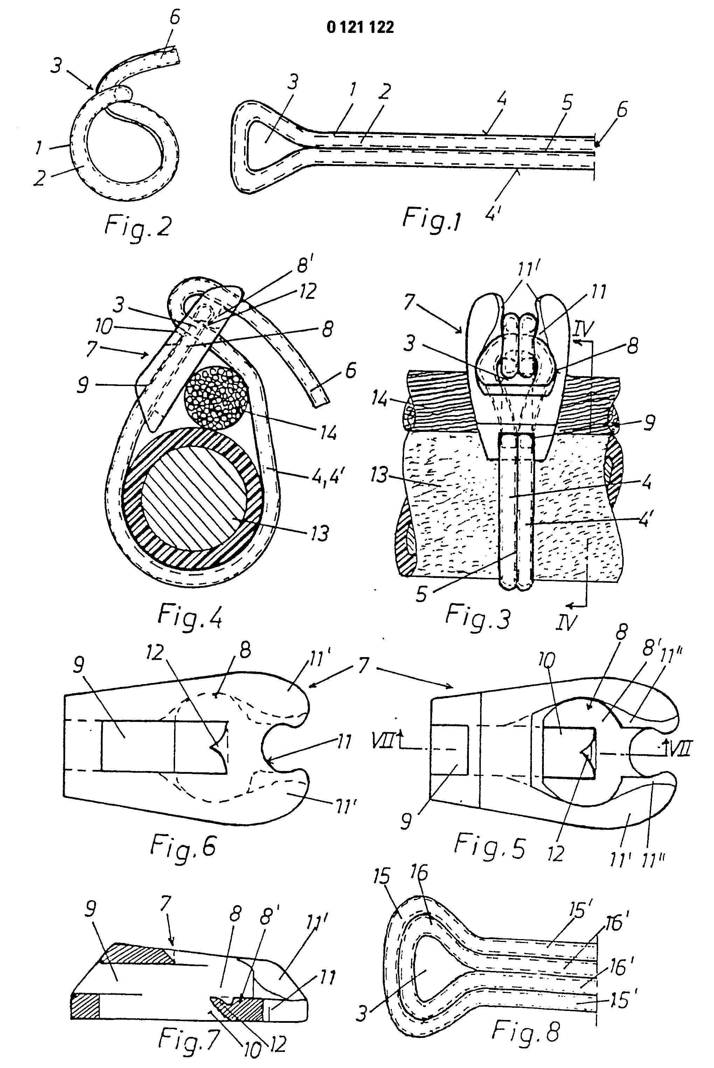

Die in den Figuren 1 und 2 dargestellte Kabelbandschelle besteht aus dem mit einer isolierenden Kunststoffummantelung 1 versehenen, flexiblen metallischen Runddraht 2, der zu der in Figur 1 gezeichneten flachliegenden U-Form gebogen ist, die in ihrem Scheitel die Durchstecköse 3 bildet, während die beiden Schenkel 4, 4' der U-Form nach innen abgekröpft sind, dicht aneinanderliegen und an der Nahtstelle 5 fest miteinander verbunden sind. Vorteilhaft wird für die abgebildete Kabelbandschelle herkömmlicher elektrischer Leitungsdraht verwendet, gegebenenfalls sogar entsprechendes Drahtabfallmaterial, wobei der Draht auf einer verhältnismäßig einfachen Maschine auf entsprechende Länge geschnitten und in die in Fig. 1 dargestellte U-Form gebogen wird. Zugleich oder danach werden die Schenkel 4, 4' an der längslaufenden Berührungsstelle 5 miteinander verschweißt. Ebensogut ist es aber auch möglich, die Drahtschenkel 4, 4' mittels eines geeigneten Klebers an der Nahtstelle 5 miteinander zu verkleben.

Wie ohne weiteres ersichtlich ist, kann die Kabelbandschelle aus ihrer in Fig. 1 dargestellten flachen Strecklage mühelos in die in Fig. 2 dargestellte Schlaufenform gebracht werden, wie das zur Aufhängebefestigung leichterer Kabel oder Leitungen notwendig ist. Dabei wird die Bandschelle um das Spann- bzw. Tragseil sowie um die daran zu befestigende Leitung gelegt, mit ihrem freien Ende 6 durch die Öse 3 hindurchgesteckt und sodann zurückgebogen, um ein Aufziehen der so gebildeten Befestigungsschlaufe zu verhindern.

Um dieses vorerwähnte Aufziehen mit Sicherheit zu verhindern, wird die Kabelbandschelle zusammen mit dem in den Fig. 5 bis 7 dargestellten Verschlußkopf 7 verwendet. Dieser ist mit einer zur Aufnahme der Bandschellenöse 3 dienenden, entsprechend gerundeten, seitlichen Aussparung 8 versehen, die in einen die einzufädelnden Drahtschenkel 4, 4' der Bandschelle aufnehmenden länglichen Einfädelkanal 9 übergeht und in ihrem Boden 8' ein Durchsteckfenster 10 für das durch letzteres und die Öse 3 hindurchzusteckende freie Bandschellenende 6 aufweist. An seinem dem Einfädelkanal 9 gegenüberliegenden Ende besitzt der Verschlußkopf 7 ein gabelartig ausgebildetes Klemmaul 11 für das durch das Durchsteckfenster 10 und die Öse 3 hindurchzuschlaufende und um 180° zurückzubiegende freie Bandschellenende 6. Um das Einlegen des freien Bandschellenendes 6 in das Klemmaul 11 zu erleichtern, sind seine Gabelbacken 11' mit Abschrägungen 11'' versehen.

Weiterhin befindet sich im Verschlußkopf 7 im Boden 8' eine in das Durchsteckfenster 10 hineinragende und in Durchsteckrichtung des freien Bandschellenendes 6 weisende federnde Klemmzunge 12, die gleichsam eine stufenlose Verrastung der Bandschelle in ihrer zugezogenen Schlaufenform erlaubt.

Der Verschlußkopf 7 besteht aus Spritzkunststoff und kann leicht hergestellt werden. Für seine Formgebung ist beachtlich, daß die seitliche Aussparung 8, das Durchsteckfenster 10, der Einfädelkanal 9 und das Klemmaul 11 so konturiert sind, daß man für die Herstellung des Verschlußkopfes mit einer einfachen zweigeteilten Spritzgußform auskommt.

In Fig. 3 und 4 ist die praktische Anwendungsweise der mit einem Verschlußkopf 7 versehenen neuen Kabelbandschelle dargestellt, wobei es also darum geht, das Kabel 13 an dem Spann- oder Tragseil 14 an mehreren in geeignetem Abstand voneinander liegenden Stellen mittels der Kabelbandschelle aufhängend zu befestigen. Zu diesem Zweck wird zunächst die in den Fig. 1 und 2 dargestellte Drahtschlinge mit dem Verschlußkopf 7 zusammengebracht, wobei die Drahtschlinge mit ihrem Bandende 6 von der seitlichen Aussparung 8 her durch den Einfädelkanal 9 soweit hindurchgeführt wird, bis die Öse 3 bzw. die sie bildende Drahtschlinge in der Aussparung 8 Platz findet. Durch leichtes Andrücken der die Öse 3 bildenden Drahtschlinge gegen den Boden 8' der Aussparung 8 wird sichergestellt, daß die Drahtschlinge sich nicht aus dem Verschlußkopf 7 rückwärts wieder herausschieben kann, was insbesondere für die Lagerung solcher Kabelbandschellen mit Verschlußkopf von Bedeutung ist. Sodann wird die Kabelbandschelle gemäß Fig. 4 mit ihren Schenkeln 4$^{IV}$ um das zu befestigende Kabel 13 und das Spannseil 14 geschlungen und mit seinem Ende 6 durch das Durchsteckfenster 10 und die Öse 3 hindurchgeschlauft, wobei die Klemmzunge 12 entsprechend verformt wird und dadurch gleichsam widerhakenartig das etwaige Zurückziehen der Schenkel 4 aus der Öse 3 verhindert. Sodann werden die Schenkel 4, 4' um 180° zurückgebogen und in das Klemmaul 11 hineingedrückt. Auf diese Weise ergibt sich durch die mehrfache Abwinkelung der Kabelbandschelle einerseits und durch deren doppelte Klemmung an der Klemmzunge 12 und dem Klemmaul 11 andererseits eine äußerst wirksame, praktisch unlösbare Festlegung der Kabelbandschelle in ihrer Schlaufen-Form, wobei aber die Kunststoffummantelung 1 dennoch äußerst geschont wird, mithin die Kabelbandschelle eine große Lebensdauer besitzt.

In Fig. 8 ist dargestellt, wie für größere Tragkräfte die Kabelbandschelle grundsätzlich auch aus mehreren ineinandergeschachtelt liegenden, entsprechend U-förmig gebogenen, kunststoffummantelten Runddrähten 15, 16 bestehen kann, die über ihre aneinanderliegenden Schenkel 15', 16' fest miteinander verbunden, also auch entweder verschweißt oder miteinander verklebt sind. Es versteht sich, daß auch und gerade für diesen Fall die Mehrfachdraht-Bandschelle vorteilhaft in Verbindung mit einem entsprechend gestalteten Verschlußkopf 7 verwendet wird, der bis auf seine Dimensionen von grundsätzlich gleicher Gestalt wie der in den Fig. 5 bis 7 dargestellte Verschlußkopf sein kann.

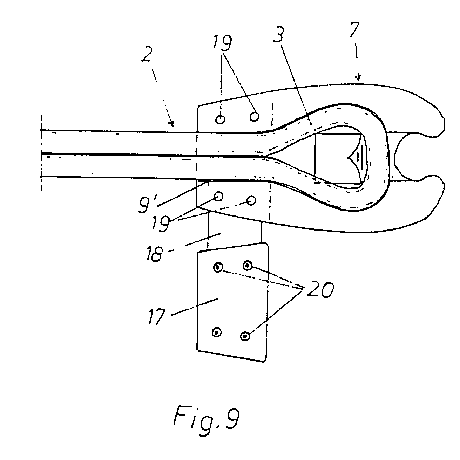

Eine andere Ausführungsform des Verschlußkopfes 7 ist in Fig. 9 dargestellt. Um das Einlegen des entsprechend gebogenen isolierten Leitungsdrahtes 2 mit seiner Öse 3 in den Verschlußkopf 7 noch zu vereinfachen, ist hier dessen Einfädelkanal 9' nach oben offen. Nach dem Einlegen des Leitungsdrahtes 2 wird der Kanal 9' durch das Klemmplättchen 17 abgedeckt. Das Klemmplättchen 17 kann als loses Einzelteil ausgebildet oder aber auch, wie dargestellt r z.B. über einen flexiblen Steg 18 mit dem Verschlußkopf 7 verbunden sein. Um die Klemmverbindung zwischen dem Verschlußkopf 7 und dem Klemmplättchen 17 in dessen den Einfädelkanal 9' abdeckendem Zustand zu gewährleisten, können beispielsweise am Verschlußkopf 7 Einsteckbohrungen 19 und am Klemmplättchen 17 entsprechend ausgebildete Klemmstifte 20 vorhanden sein. Ebenso gut können die Stifte 20 aber auch am Verschlußkopf 7 und die Klemmöffnungen 19 im Klemmplättchen 17 angeordnet sein. Auch kann dafür jede andere geeignete Klemm- oder Schnappverbindung verwendet werden, wie sie beim Ineinanderfügen von Kunststoffspritzgußteilen üblich ist.

Im Rahmen der vorliegenden Erfindung sind mancherlei Abwandlungen möglich. So kann die Kabelbandschelle grundsätzlich auch aus zunächst blankem Runddraht 2 bestehen, der also in uninsolierter Form vorliegt und zuerst entsprechend U-förmig gebogen wird, um ihn erst dann mit Kunststoff zu beschichten, sei es in einer entsprechenden Spritzgußform oder aber auch im Wege des Tauchverfahrens. Obwohl in diesen Fällen die Drahtschenkel des Runddrahts grundsätzlich auch unmittelbar dicht aneinanderliegen können, empfiehlt es sich dochr sie vor dem Kunststoffüberschichten auf entsprechender Distanz zu halten, damit auch in diesem Falle ein möglichst gleichmäßiger Kunststoffmantel gebildet wird, der frei von scharfkantigen Stellen und damit verbundenen lokalen Überbeanspruchungen ist.

**Patentansprüche**

1. Kabelbandschelle aus mit einer flexiblen Metalleinlage (2) versehenem Kunststoff (1), die an ihrem einen Ende eine zum Durchstecken des anderen Endes dienende Öse (3) besitzt, insbesondere für die Aufhängebefestigung von Kabeln, Leitungen, Rohren od. dgl. an Spannseilen, dadurch gekennzeichnet, daß die Bandschelle aus kunststoffummanteltem Runddraht (2) besteht, der zu einer in ihrem Scheitel die Öse (3) bildenden U-Form mit nach innen abgekröpften, dicht aneinanderliegenden Schenkeln (4, 4') gebogen ist, die fest miteinander verbunden sind.

2. Kabelbandschelle nach Anspruch 1, dadurch gekennzeichnet, daß sie aus entsprechend U-förmig gebogenemr isoliertem Leitungsdraht (2) besteht, dessen nebeneinanderliegende Schenkel (4, 4') miteinander verklebt oder verschweißt sind.

3. Kabelbandschelle nach Anspruch 1, dadurch gekennzeichnet , daß sie aus Runddraht besteht, der zunächst entsprechend U-förmig gebogen und sodann mit Kunststoff beschichtet worden ist.

4. Kabelbandschelle nach einem der Ansprüche 1 bis 3, dadurch gekennzeichnet, daß sie aus mehreren ineinander geschachtelt liegenden, entsprechend geformten, kunststoffummantelten Runddrähten (15, 16) besteht, die über ihre aneinanderliegenden Schenkel (15', 16') fest miteinander verbunden sind.

5. Kabelbandschelle nach einem der Ansprüche 1 bis 4, dadurch gekennzeichnet, daß sie mit einem ihre Öse (3) aufnehmenden Verschlußkopf (7) versehen ist, der mit einer die Ösen-Aufnahme bildenden, entsprechend gerundeten, seitlichen Aussparung (8) versehen ist, die in einen die einzufädelnden Drahtschenkel (4, 4') der Bandschelle aufnehmenden länglichen Einfädelkanal (9) übergeht und in ihrem Boden (8') ein Durchsteckfenster (10) für das durch letzteres und die Öse (3) hindurchzusteckende freie Bandschellenende (6) aufweist.

6. Kabelbandschelle nach Anspruch 5, dadurch gekennzeichnet, daß der Verschlußkopf (7) an seinem dem Einfädelkanal (9) gegenüberliegenden Ende ein gabelartig ausgebildetes Klemmmaul (11) für das durch das Durchsteckfenster (10) und die Öse (3) hindurchzusteckende und um 180° zurückzubiegende freie Bandschellenende (6) aufweist.

7. Kabelbandschelle nach Anspruch 6, dadurch gekennzeichnet, daß das im Verschlußkopf (7) vorhandene Klemmaul (11) mit abgeschrägten Gabelbacken (11') versehen ist.

8. Kabelbandschelle nach einem der Ansprüche 5 bis 7, dadurch gekennzeichnet, daß im Boden (8') der Aussparung (8) eine in das Durchsteckfenster (10) hineinragende und in Durchsteckrichtung des freien Bandschellenendes (6) weisende, federnde Klemmzunge (12) vorgesehen ist.

9. Kabelbandschelle nach einem der Ansprüche 5 bis 8, dadurch gekennzeichnet, daß der Verschlußkopf (7) mit einem den Einfädelkanal (9') abdeckenden Klemmplättchen (17) versehen ist.

10. Kabelbandschelle nach Anspruch 9, dadurch gekennzeichnet, daß das Klemmplättchen (17) über einen flexiblen Steg (18) mit dem Verschlußkopf (7) verbunden ist.

11. Kabelbandschelle nach einem der Ansprüche 5 bis 10, dadurch gekennzeichnet, daß ihr Verschlußkopf (7) aus Spritzkunststoff besteht.

## Claims

1. Cable tie of plastics material (1) provided with a flexible metallic core (2), which has at its one end an eye (3) through which the other end of the tie can be passed, particularly for the suspended fastening of cables, conductors, pipes and the like to tensile wire, characterised in that the tie is of round wire (2) sheathed by plastics material, bent into a U-shape forming the eye (3) at its vertex with inturned limbs (4, 4') positioned close together and fixedly connected together.

2. Cable tie according to claim 1, characterised in that it comprises insulated conductive wire (2) which is bent into U-shaped form and which has its adjacent limbs (4, 4') glued or welded together.

3. Cable tie according to claim 1, characterised in that it consists of round wire which has first been bent into U-shaped form and then has been coated with plastics material.

4. Cable tie according to one of claims 1 to 3, characterised in that it consists of a plurality of plastics-sheathed, suitably shaped round wires (15, 16) neighbouring one another, and which are fixedly connected with one another over the region of their contacting limbs (15', 16').

5. Cable tie according to one of claims 1 to 4, characterised in that it is provided with an anchoring head (7) which receives the eye (3) and is provided with a correspondingly rounded lateral recess (8) which forms the eye socket, the recess extending into an elongate threading passage (9) which receives the wire limbs (4, 4') of the tie, and the recess, in its base (8'), having a window (10) for the passage therethrough of the free end (6) of the tie which is adapted to be pushed through the window and through the eye (3).

6. Cable tie according to claim 5, characterised in that the anchoring head (7) includes at its end opposite to the threading passage (9) a forked clamping jaw (11) for the free end (6) of the tie which is first passed through the window (10) and the eye (3) and is then bent back on itself through 180°.

7. Cable tie according to claim 6, characterised in that the clamping jaw (11) provided on the anchoring head (7) is provided with sloping forked jaws (11').

8. Cable tie according to one of claims 5 to 7, characterised in that in the base (8') of the recess (8) there is provided a resilient latching tongue (12) which projects into the window (10) and extends in the direction of insertion of the free end (6) of the tie.

9. Cable tie according to one of claims 5 to 8, characterised in that the anchoring head (7) is provided with a clamping plate which closes over the threading passage (9').

10. Cable tie according to claim 9, characterised in that the clamping plate (17) is connected to the anchoring head (7) by means of a flexible web (18).

11. Cable tie according to one of claims 5 to 10, characterised in that the anchoring head (7) is injection-moulded from plastics material.

## Revendications

1. Serre-câble à ruban fait d'une matière plastique (1) pourvue d'une partie intérieure métallique flexible (2), et possédant au niveau de l'une de ses extrémités, une boucle (3) destinée à être traversée par l'autre extrémité, notamment pour fixer des câbles, des conduites, des tuyaux ou des éléments analogues en suspension sur des câbles tendeurs, caractérisé en ce que le serre-câble à ruban se compose d'un fil métallique rond (2) gainé de matière plastique et plié pour former un U définissant la boucle (3) au niveau de son sommet et dont les branches (4, 4') coudées vers l'intérieur et étroitement juxtaposées, sont rigidement réunies l'une à l'autre.

2. Serre-câble à ruban selon la revendication 1, caractérisé en ce qu' il se compose d'un fil métallique (2) isolé et plié de manière appropriée sous la forme d'un U dont les branches (4, 4') situées côte à côte sont collées ou soudées ensemble.

3. Serre-câble à ruban selon la revendication 1, caractérisé en ce qu'il se compose d'un fil métallique rond qui a été d'abord plié de manière appropriée sous la forme d'un U et ensuite enrobé d'une matière plastique.

4. Serre-câble à ruban selon l'une des revendications 1 à 3, caractérisé en ce qu'il se compose de plusieurs fils métalliques ronds (15, 16) qui sont imbriqués les uns dans les autres, conformés de manière appropriée et gainés de matière plastique, et qui sont rigidement réunis les uns aux autres par l'intermédiaire de leurs branches juxtaposées (15', 16').

5. Serre-câble à ruban selon l'une des revendications 1 à 4, caractérisé en ce qu' il est pourvu d'une tête de verrouillage (7) qui reçoit sa boucle (3) et qui comporte un évidement latéral (8) arrondi de manière appropriée pour former le logement de la boucle et qui aboutit dans un canal d'insertion oblong (9) logeant les branches de fil (4, 4') à insérer du serre-câble à ruban et présente, dans son fond (8'), une ouverture de passage (10) pour l'extrémité libre (6) du serre-câble à ruban, qui doit passer dans cette dernière et dans la boucle (3).

6. Serre-câble à ruban selon la revendication 5, caractérisé en ce que la tête de verrouillage (7) comporte, au niveau de son extrémité opposée au canal d'insertion (9), une mâchoire de serrage (11) conçue en forme de fourche pour l'extrémité libre (6) du serre-câble à ruban, qui doit traverser l'ouverture de passage (10) et la boucle (3) et être repliée sur 180°.

7. Serre-câble à ruban selon la revendication 6, caractérisé en ce que la mâchoire de serrage (11) prévue dans la tête de verrouillage (7) présente des joues biseautées (11').

8. Serre-câble à ruban selon l'une des revendications 5 à 7, caractérisé en ce que, dans le fond (8') de l'évidement (8), est prévue une languette de serrage élastique (12) faisant saillie dans l'ouverture de passage (10) et orientée dans la direction d'insertion de l'extrémité libre (6) du serre-câble à ruban.

9. Serre-câble à ruban selon l'une des revendications 5 à 8, caractérisé en ce que la tête de verrouillage (7) comporte une plaquette de serrage (17) recouvrant le canal d'insertion (9').

10. Serre-câble à ruban selon la revendication 9, caractérisé en ce que la plaquette de serrage (17) est reliée à la tête de verrouillage (7) par l'intermédiaire d'une barrette flexible (18).

11. Serre-câble à ruban selon l'une des revendications 5 à 10, caractérisé en ce que sa tête de verrouillage (7) est constituée d'une matière plastique coulée par injection.

0 121 122

Fig.2

Fig.1

Fig.4

Fig.3

Fig.6

Fig.5

Fig.7

Fig.8

1

Fig.9